# EUROPEAN PATENT APPLICATION

(11) **EP 4 841 369 A1**
(43) Date of publication of application: **18.11.2026**
(21) Application number: 25176590.5
(22) Date of filing: 15.05.2025
(51) Int. Cl.: G05B 13/02

(54) **METHODS AND ARRANGEMENTS FOR ADAPTING THE OPERATION OF A BUILDING AUTOMATION SYSTEM**

(71) Applicant: Helvar Oy Ab, 02150 Espoo (FI)
(72) Inventor: Juslén, Henri, 02150 ESPOO (FI); Vesterinen, Matti, 02150 ESPOO (FI)
(74) Representative: Papula Oy

(57) **Abstract**

In a building automation system information indicative of sensor findings (401) by one or more sensors is accumulated. A machine learning process (404, 405, 406, 501, 502, 601, 701) repeatedly update values for one or more operating parameters of the building automation system. A subset of most recently accumulated information is repeatedly evaluated (403) to find out whether said subset represents an abrupt change compared to information accumulated earlier than said subset. In response to finding an abrupt change, an effectiveness at which most recently accumulated pieces of said information affect said updating of the operating parameter values by the machine learning process is temporarily changed (405, 406, 501, 502, 601, 701).

## Description

### FIELD OF THE INVENTION

The invention is related to the field of adaptive building automation systems. In particular, the invention is related to optimizing the way in which a building automation may automatically adapt to changes in a monitored and controlled environment.

### BACKGROUND

An adaptive building automation system is one capable of automatically changing its operation in response to accumulated sensory data. The accumulated sensory data is indicative of events that have taken place within the monitored and controlled environment, and the purpose of the changes is to optimize the operation to better meet some predefined criteria.

As an example, an adaptive lighting system may be considered. Motion sensors can be used to detect users moving within the environment served by the lighting system. Luminaires may react to the sensor signals by providing lighting not only at areas where the users were already detected, but also at nearby areas where the users will probably proceed to. By repeatedly recording routes that users are found to take, the lighting system may gradually change its operation so that it can more accurately predict the areas where such preparatory increasing of illumination is the most desirable in each case. Other examples of adaptive building automation systems include, but are not limited to, adaptive heating and ventilation, adaptive access control, and adaptive displaying of signs and messages to users.

A problem involved in known adaptive building automation systems is the difficulty of knowing, how strongly each detected event or combination of events should affect the learning. This problem is actual in systems that apply continuous learning, in contrast to systems that would be configured during an introductory period and thereafter set to just operate accordingly. As an example of a problem in a continuously learning system, one may imagine a situation where the whole personnel of the company were exceptionally gathered to one floor of the office building for a training and planning day. During that day, the sensors of the lighting system would detect a large number of events that differ significantly from the ordinary use patterns of that floor. If they emphasize such detected events in their continuous learning, the lighting system may operate in some inappropriate way the next day.

On the other hand, it may be that the sudden radical change in detected events did not result from just an isolated occasion after all but from an organizational change that will apply from that day on, also in the future. If the lighting system based its continuous learning only on long-term averages of detected events, it may take an awkwardly long time for it to adapt to the changed conditions.

### SUMMARY

It is an objective to present methods and devices that implement improved adaptability to changes in the way in which users behave in an environment served by a building automation system. Another objective is to ensure that adapting the operation of the building automation system is smooth and logical in those cases where a meaningful change has occurred, while temporary fluctuations in detected information does not cause unnecessarily large changes in operation.

These and other advantageous objectives are met by detecting changes in information indicative of user behaviour, and appropriately changing the effectiveness at which most recently accumulated information affects the updating of operating parameter values in such cases.

According to a first aspect, there is provided a method for adapting operation of a building automation system. The method comprises accumulating information indicative of sensor findings by one or more sensors of the building automation system. Based on the accumulated information, a machine learning process is applied to repeatedly update values for one or more operating parameters of the building automation system. The method comprises repeatedly evaluating a subset of most recently accumulated pieces of the accumulated information to find out whether said subset represents an abrupt change compared to information accumulated earlier than said subset. In response to finding that said subset represents an abrupt change compared to information accumulated earlier than said subset, the method comprises temporarily changing an effectiveness at which most recently accumulated pieces of said information affect said updating of the operating parameter values by the machine learning process.

According to an embodiment, said repeated evaluating of the subset of most recently accumulated pieces of information comprises comparing most recently received first information indicative of a first amount of light or sound received by one or more light or sound sensors, respectively, to previously received second information indicative of a second amount of light or sound received by the same one or more light or sound sensors. A difference larger than a first predetermined threshold between said first information and said second information may then be taken as a finding that said subset represents an abrupt change. This involves at least the advantage that decisions may be based on incidents the nature of which and the relation of which to user behaviour and needs is relatively well understood.

According to an embodiment, said repeated evaluating of the subset of most recently accumulated pieces of information comprises comparing most recently received third information indicative of a first amount of gaseous substance or first temperature measured by one or more gas or temperature sensors, respectively, to previously received fourth information indicative of a second amount of gaseous substance or second temperature measured by the same one or more gas or temperature sensors. A difference larger than a second predetermined threshold between said third information and said fourth information may then be taken as a finding that said subset represents an abrupt change. This involves at least the advantage that decisions may be based on incidents the nature of which and the relation of which to user behaviour and needs is relatively well understood.

According to an embodiment, said repeated evaluating of the subset of most recently accumulated pieces of information comprises comparing most recently received fifth information indicative of a first amount of user activity detected by one or more presence or movement sensors to previously received sixth information indicative of a second amount of user activity detected by the same one or more presence or movement sensors. A difference larger than a third predetermined threshold between said fifth information and said sixth information may then be taken as a finding that said subset represents an abrupt change. This involves at least the advantage that decisions may be based on incidents the nature of which and the relation of which to user behaviour and needs is relatively well understood.

According to an embodiment, said temporary changing of the effectiveness at which most recently accumulated pieces of said information affect said machine learning process comprises temporarily decreasing said effectiveness for a period. This involves at least the advantage that undesired effects of incidents that should not cause changes can be kept small.

According to an embodiment, if the abrupt change continues throughout said period, the method comprises executing an intensified phase of said machine learning process with an increased effectiveness at which said most recently accumulated pieces of said information affect said machine learning process. This involves at least the advantage that changes can be made effectively when there is a real need for a change.

According to an embodiment, in response to finding that the abrupt change fades out during said period, the method comprises restoring said values of said one or more operating parameters towards what they were before said most recently accumulated pieces of said information began to accumulate, and/or cancelling said temporary change of the effectiveness at which most recently accumulated pieces of said information affect said machine learning process. This involves at least the advantage that undesired effect of incidents that did not represent true changes can be kept small.

According to an embodiment, for the period during which said effectiveness remains temporarily decreased, the method comprises buffering said most recently accumulated pieces of the accumulated information. Said intensified phase of said machine learning process may then comprise using also the buffered pieces of accumulated information as inputs to the machine learning process. This involves at least the advantage that the method may adapt appropriately both to temporary, insignificant changes and to permanent, significant changes.

According to an embodiment, said temporary changing of the effectiveness at which most recently accumulated pieces of said information affect said machine learning process comprises temporarily increasing said effectiveness. This involves at least the advantage that the machine learning process can be kept simple and straightforward.

According to a second aspect, there is provided an apparatus for adapting operation of a building automation system. The apparatus comprises an information storage configured to accumulate information indicative of sensor findings by one or more sensors, an operating parameters storage configured to maintain values of one or more operating parameters, and a processing engine configured to, based on the accumulated information in the information storage, apply a machine learning process to repeatedly update one or more of the operating parameter values stored in the operating parameters storage. The processing engine is configured to repeatedly evaluate a subset of most recently accumulated pieces of the accumulated information to find out whether said subset represents an abrupt change compared to information accumulated earlier than said subset. In response to finding that said subset represents an abrupt change compared to information accumulated earlier than said subset, the processing engine is configured to temporarily change an effectiveness at which most recently accumulated pieces of said information affect said updating of the operating parameter values.

According to an embodiment, the apparatus is a control apparatus configured to centrally maintain said one or more operating parameter values for use by other devices of the building automation system through a communications interface. This involves at least the advantage that the operation of even a relatively large building automation system may benefit from the advantageous characteristics explained here with only a small subset of devices required to be capable of this kind of machine learning.

According to an embodiment, the apparatus comprises one or more actuators configured to generate effects serving users of the building automation system, and an operating engine configured to operate said one or more actuators at least partly on basis of the one or more operating parameter values maintained in said operating parameters storage. This involves at least the advantage that distributed computation capabilities of a building automation system can be utilized effectively.

According to an embodiment, said one or more actuators comprise light sources for providing illumination in an environment served by the building automation system. This involves at least the advantage that illumination in a controlled environment can be made to adapt intelligently to changing needs of users.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a building automation network with wireless communications,
**figure 2** illustrates a building automation network with wired communications,
**figure 3** illustrates a method in the form of a state diagram,
**figure 4** illustrates a method in the form of a flow diagram,
**figure 5** illustrates a method in the form of a flow diagram,
**figure 6** illustrates a method in the form of a flow diagram,
**figure 7** illustrates a method in the form of a flow diagram,
**figure 8** illustrates a device for use in a building automation system, and
**figure 9** illustrates a device for use in a building automation system.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

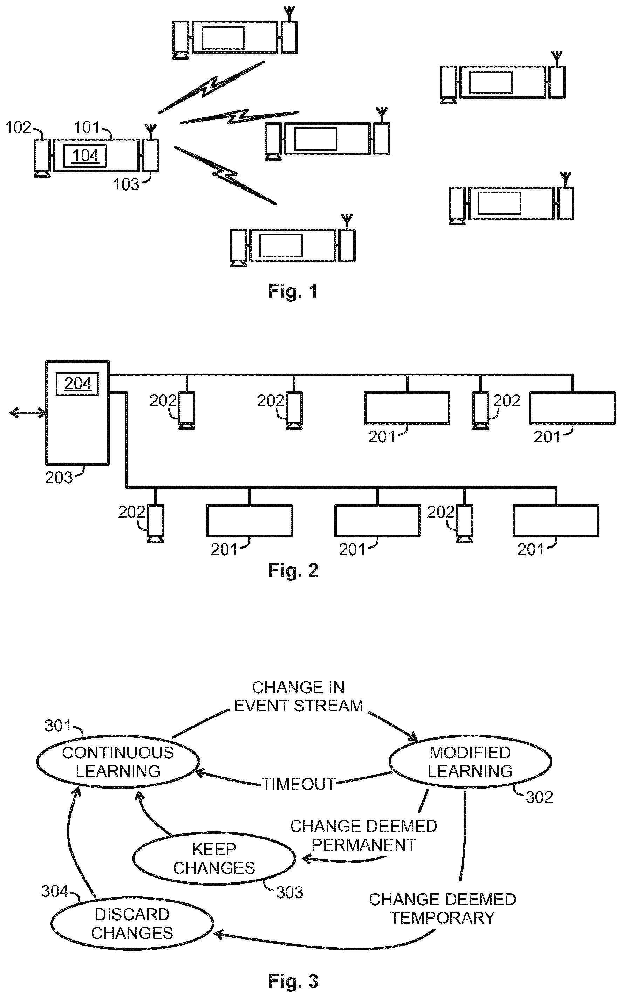

Fig. 1 illustrates a number of nodes in a building automation system. For the sake of example, it may be assumed that the nodes in fig. 1 are luminaires for providing illumination in an environment served by the building automation system. In such a case, the nodes in fig. 1 comprise light sources as actuators. In a more general case, a node in a building automation system as meant here can be considered to comprise one or more actuators configured to generate effects serving users of the building automation system. In addition to, or as an alternative to, light sources, such actuators may include, but are not limited to, heaters, air conditioners, ventilators, electric locks, window shades, blinds, awnings, or the like.

In fig. 1, each node comprises a main unit 101, a sensor subsystem 102, a communications subsystem 103, and - here included in the main unit 101 - a processing engine 104. Roles of such subsystems are described in more detail later in this text. In short, a node may use its sensor subsystem 102 to accumulate information indicative of sensor findings. Based on such accumulated information, the node may use its processing engine 104 to apply a machine learning process to repeatedly update values for one or more operating parameters of the building automation system. The node may also use its communications subsystem 103 to inform other nodes of its sensor findings and/or of other operation-related information. As a non-limiting example, if the sensor subsystem 102 is used to detect movement within an area covered by one node, the node may use its communications subsystem 103 to announce to other nodes that it has detected movement. Such transmissions may be useful for the other nodes for making conclusions about whether they should preparatorily initiate some action, like switching lights on in a direction into which a user detected by the first-mentioned node is likely to proceed.

Fig. 2 illustrates a different kind of a building automation system. While the system of fig. 1 used wireless communications and distributed information storing and decision-making, the system of fig. 2 uses wired communications and has at least a part of information storing and decision-making functions implemented in a centralized control apparatus. Reference designators 201 in fig. 2 denote actuator nodes, which - for facilitating easy comparison to the description of fig. 1 above - may be assumed to be luminaires. In fig. 2, there are separate sensor nodes 202. The actuator nodes 201 and sensor nodes 202 are all coupled to a centralized control apparatus 203 with wired connections such as a digital addressable control bus for example. A processing engine 204 in the centralized control apparatus 203 is configured to, as a result of communications with the sensor nodes 202, accumulate information indicative of sensor findings. Additionally, the processing engine 204 is configured to apply a machine learning process to repeatedly update values for one or more operating parameters of the building automation system, based on the accumulated information.

The concept of operating parameters of the building automation system should be understood widely so that it covers pieces of information the contents of which have a deterministic effect on how the system operates. In the sense meant here, operating parameters are subject to machine learning so that the system can automatically change their contents with the aim of making the building automation system serve better the needs of users.

As a non-limiting example, one may consider a lighting system that is capable of automatically changing the amount, quality, and/or distribution of light so that it serves the needs of users to have illumination where it is needed. Considering a particular luminaire in a system like that of fig. 1, stored values of its operating parameters should tell, to which extent it should react to transmissions it receives from the other luminaires. It may apply a machine learning process in which it compares sequences of previously received transmissions to detection of movement by its own sensor. As an example, it may find that after receiving transmissions from two other luminaires A and B in this order and with less than 5 seconds interval, it typically sees movement with its own sensor within 7 seconds. On the other hand, if the transmissions from luminaires A and B come in a reverse order and/or with an interval longer than 5 seconds, it takes typically 15 seconds before the luminaire sees movement with its own sensor. The machine learning process may result in setting operating parameter values that mean brightening the light to 100 % within less than 7 seconds from the latest less-than-5-seconds A-B sequence but only brightening the light preparatorily to 50% otherwise.

Another example of a relation between sensor findings and operating parameter values is a system in which a relatively simple light detector measures the amount of ambient light. The building automation system may be programmed to keep that amount constant, by increasing or decreasing the amount of artificially produced light so that it sums up with natural light to the predetermined amount. There may additionally be a lighting control switch available to the user, and the system may consider actuations of the lighting control switch as sensor findings. Namely, if a user considers the previously programmed amount of lighting either too bright or too dim, they will operate the switch to set the amount of lighting more suitable. By accumulating information about the detected actuations of the light switch, the system may learn what would be the optimal amount of lighting in each case, for example at each time of the day.

For the purposes of this description, the details of the machine learning process and the operating parameters are not important. What is important, however, is the effectiveness at which the most recently accumulated pieces of information should affect the updating of the operating parameter values by the machine learning process in each case.

There are many ways in which such effectiveness may be defined. As an illustrative but non-limiting example, updating the operating parameter values with a machine learning process may be thought to involve calculating one or more weighted sums of the accumulated information. A weight given to each term in such a weighted sum represents its relative importance to the outcome and, hence, the effectiveness at which it affects the updating of the operating parameter value(s) in question. In a typical machine learning process of such kind, it is advisable to give larger weights to the most recently accumulated pieces of information, as they are the most likely to reflect the currently actual way in which users behave in the area served by the building automation system. In other words, during normal use, the most recently accumulated pieces of information are the most reliable indicators of the needs of the users within said area.

Another non-limiting example of controlling effectiveness involves changing the importance of information indicative of different monitored quantities. A system may involve, for example, PIR sensor(s) for detecting movement and sound sensor(s) for detecting sound. Repeatedly evaluating a subset of most recently accumulated pieces of information may show that the monitored space may have become so noisy that it is difficult to make any educated decisions based on the output of the sound sensor(s). In response, a relative weight given to the most recently accumulated pieces of information indicative of detected sound may be made smaller, so that at least temporarily, updating of the operating parameter values by the machine learning process is primarily based on the output of the PIR sensor(s).

If the most recently accumulated pieces of information are always considered the most important and, consequently, as the most decisive input to the machine learning process, undesirable effects may arise if there was only a short disruption in an otherwise quite constant pattern of user needs. To avoid such undesirable effects, an improved method is hereby described with reference to fig. 3.

Fig. 3 is a state diagram that illustrates a method for adapting operation of a building automation system. Normally, the execution of the method involves a continuous learning state 301 that comprises accumulating information indicative of sensor findings by one or more sensors in the building automation system. The sensor findings may be described to form an event stream. Additionally, the continuous learning state 301 comprises applying, based on the accumulated information, a machine learning process to repeatedly update values for one of more operating parameters of the building automation system.

A subset of most recently accumulated pieces of the accumulated information is repeatedly evaluated to find out, whether it represents an abrupt change compared to information accumulated earlier than said subset. Here, a threshold should be applied to decide, what is an abrupt change. Namely, the reason for applying a machine learning process in the first place is a reasonable assumption that there will be changes in the way in which users behave, so that the building automation system should smoothly adapt itself to such changes to keep up with the changing needs of the users. Additionally, or alternatively, there may be changes originating from other factors than user behaviour, like from a construction site next door, changes in traffic arrangements, or the like.

The extent of detected changes may be evaluated by using statistical methods. As an example, it may have been found that sensor findings typically vary within a range defined by a mean value and standard deviation. New sensor findings that are within such a range or at most differ from it by a predefined amount may be considered normal, not associated with any abrupt change. On the other hand, sensor findings that deviate from such a range by more than said predefined amount, in particular if such sensor findings seem to repeat in a statistically significant sequence, may be considered to represent an abrupt change.

As an example, the repeated evaluating of the subset of most recently accumulated pieces of information may comprise comparing most recently received information indicative of an amount of light or sound, received by one or more light or sound sensors, to previously received information indicative of an amount of light or sound received by the same sensor(s) earlier. A difference larger than a predetermined threshold between these compared amounts of information may then be taken as a finding that the subset of most recently accumulated pieces of information represents an abrupt change. The amount of measured light may serve e.g. as an indication of how much light is reflected back from surfaces in the field of view of the light sensor. Changes in the amount of reflected light may mean that the arrangement of furniture in the illuminated room has changed, which may mean a change in the way in which users behave in the room and, consequently, what are their needs for lighting. The amount of received sound may serve e.g. as an indication of how movable wall elements are placed and/or whether adjacent rooms have been combined with or separated from each other, again meaning a change in the way in which users behave and what are their needs for service from the building automation system.

As a special case, the amount and/or quality of received sound may serve as an indication that renovation works are performed. This applies particularly if the process of evaluating the accumulated information is sophisticated enough to detect, for example, the sounds of drilling, sawing, or hammering.

As another example, the repeated evaluating of the subset of most recently accumulated pieces of information may comprise comparing most recently received information indicative of an amount of gaseous substance or a temperature measured by one or more gas or temperature sensors, respectively, to previously received information indicative of an amount of gaseous substance or temperature measured by the same sensor(s). A difference larger than a predetermined threshold between these compared amounts of information may then be taken as a finding that said subset of most recently accumulated pieces of information represents an abrupt change. The gaseous substance of interest may be for example carbon dioxide and/or one or more volatile organic compounds that may serve as an indication of how many people are in a room and/or how long they have been there. Compared to the possible detection of noises from renovation works, measurements of (essentially) gaseous substances may cover detecting airborne dust, traces of smoke, or other emissions or impurities typical of renovation works. Also changes in temperature may serve as an indication of ongoing renovation works, particularly if they involve lengthy periods of abnormal operation of the heating system and/or keeping a door or a window open.

As yet another example, the repeated evaluating of the subset of most recently accumulated pieces of information may comprise comparing most recently received information indicative of an amount of user activity detected by one or more presence or movement sensors to previously received information indicative of an amount of user activity detected by the same sensor(s). A difference larger than a predetermined threshold between these compared amounts of information may then be taken as a finding that said subset of most recently accumulated pieces of information represents an abrupt change. Compared to the possible detection of noises and/or emissions or impurities from renovation works, a sophisticated enough sensor subsystem may be capable of recognizing protective clothing, helmets, tools, or other visually observable objects that are typical to renovation works but not to the normal use of e.g. office environments.

In fig. 3, a change from the continuous learning state 301 from a modified learning state 302 takes place when there was a change in the event stream. In other words, the state change comes as a response to finding that the subset of most recently accumulated pieces of information represents an abrupt change compared to information accumulated earlier than said subset. The modified learning state 302 involves temporarily changing an effectiveness at which the most recently accumulated pieces of information affect the updating of the operating parameter values by the machine learning process.

Two possible scenarios are involved in fig. 3. If the abrupt change that triggered the transition from state 301 to state 302 is deemed to have been a permanent change, the system should adapt to the detected changes as smoothly as possible as in the intermediate state 303. If, however, the abrupt change is deemed to have been only temporary, the system should discard the changes at the alternative intermediate state 304, i.e. not use them (at least not to any significant extent) as inputs to the machine learning process. From both intermediate states 303 and 304, a further state change takes place to the continuous learning state 301. As a third option, there may be a simple timeout that triggers a return from the modified learning state 302 to the continuous learning state 301. As an example, the system may be configured to that each instant of modified learning continues for a certain period, and the evaluation of whether the associated change was deemed permanent or temporary may have little significance.

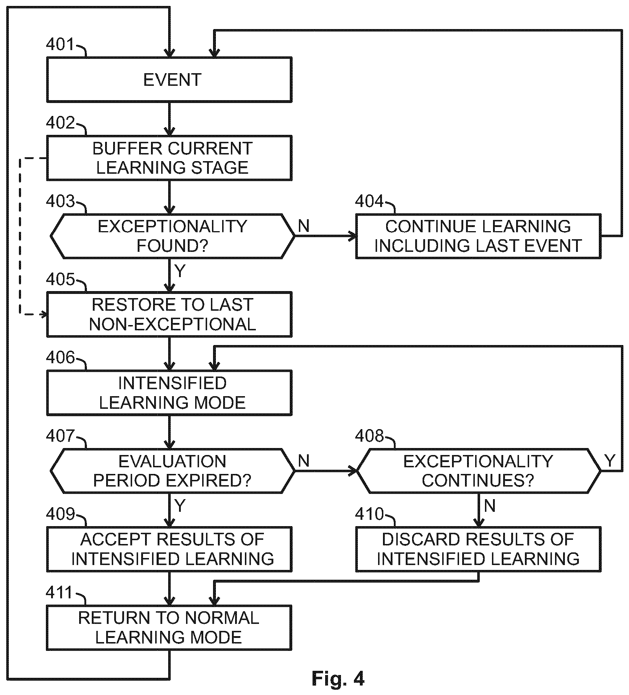

In the modified learning state 302, the temporary changing of the effectiveness at which the most recently accumulated pieces of information affect the machine learning process may take various forms. According to an embodiment, it may comprise temporarily decreasing the effectiveness for a period. Such a choice represents a principle of proceeding carefully. As long as one does not know whether the change will be temporary or permanent, it may be advisable not to let the most recently accumulated values affect the machine learning process very much, or even not at all. An example of a method of this kind is shown as a flow diagram in fig. 4.

At step 401, there occurs an event from which the building automation system receives information in the form of a sensor finding. At step 402, the state of the machine learning process before taking this last piece of information into account is buffered along with a number of similarly buffered earlier learning stages. How many such earlier learning stages are kept in the buffer, or how long preceding time frame the buffered earlier stages represent, depends on aspects that are described later in this text.

At step 403, there is made an evaluation that involves the latest received piece of information and - most advantageously - a number of previously received pieces of information to find out, whether the subset of information taken to the evaluation represents an abrupt change. Basically, it would be possible to evaluate only the very latest piece of information. However, as all sensor subsystems are susceptible to produce individual, non-representative outlier findings every now and then, it is more advisable to always take a larger subset of most recently received pieces of information for evaluation.

If nothing exceptional was found, i.e. if the evaluation did not result in any finding of abrupt change, the machine learning process continues at step 404 with also the latest piece of information taken into account and the method of fig. 4 returns to wait for the next event at step 401.

If, however, the evaluation at step 403 resulted in a finding that the evaluated subset of accumulated information represents an abrupt change, the method of fig. 4 proceeds from step 403 to step 405. It is now assumed that a whole subset of the accumulated information, since some earlier event, represented an abrupt change. In other words, there is a plurality of most recent sensor findings that reflect something unusual or exceptional in comparison with how things used to proceed before that. These most recent sensor findings may relate to some passing phase, after which things return to normal. If that is the case, the subset of exceptional sensor findings should not affect the otherwise constantly ongoing machine learning process. Alternatively, these most recent sensor findings may reflect a "new normal", to which the system should adapt as quickly as possible. Which of these alternatives is in question, is not yet known.

The size of the subset of accumulated information that is examined at step 403 has an effect on how much buffering capacity must be available at step 402. Here it may be noted that the outcome of step 403 may depend on statistical factors that require a sufficient amount of input data to give reliable results. The method should be able to "roll back" to any such previous learning stage after which there has occurred events that the examination at step 403 determines to represent an abrupt change when taken together. Knowing the maximum size of subsets that may come subject to examination at step 403 then answers the question of how many previous learning stages should be kept in the buffer of step 402.

In the method of fig. 4, step 405 involves one example of temporarily decreasing, for a period, the effectiveness at which the most recently accumulated pieces of information affect the updating of the operating parameter values by the machine learning process. Here, an approach is taken in which all sensor findings of the exceptional-deemed subset are temporarily excluded from affecting the machine learning process, and the parameter values are restored to that earlier buffered learning stage to which none of the exceptional sensor findings had affected yet. Receiving sufficient information about the last buffered "normal" learning stage is represented with the dashed arrow from step 402 to step 405.

After step 405, the method of fig. 4 comprises executing an intensified phase of the machine learning process with an increased effectiveness at which most recently accumulated pieces of information affect the machine learning process. In other words, while the learning stage that affected the operating parameter value(s) that are in actual use was frozen at step 405, in parallel there is executed an intensified phase of the machine learning process that prepares for a possible later confirmation that the abrupt change indeed represented a new normal. The operating parameter value(s) emerging from such an intensified phase are just not put into practice yet but kept in store for the time being.

In fig. 4 it is assumed that there is a predetermined evaluation period during which the intensified learning mode of step 406 goes on. As an example, the evaluation period might last for a couple of days, like two days, three days, four days, or a five-day working week. As long as the evaluation period continues, if also the previously detected abrupt change seems to remain the same, the method of fig. 4 circulates in the loop 406-407-408. Throughout this period, the operating parameter value(s) that were characteristic of the restored learning stage of step 405 remain in use. Parallelly, however, the intensified learning mode of step 406 continues to execute.

If at step 407 it is found that the evaluation period expired, a conclusion can be made that the previously detected abrupt change indeed represented a new normal. At step 409 this conclusion leads to quickly and effectively adapting the operation of the building automation system to the new normal by accepting the results of intensified learning. This can be done most straightforwardly by replacing the operating parameter value(s) that were characteristic of the restored learning stage of step 405 with new values that resulted from the intensified learning mode that was executed during the evaluation period. After this, the machine learning process may continue as usual, as shown with the return to normal learning mode at step 410 and return to step 401.

The other possibility is that at some point during the evaluation period, the check at step 408 revealed that the previously detected abrupt change has faded out. Hence, a conclusion can be made that only some temporary disturbance took place that the building automation system can neglect in the future. In the method of fig. 4, this leads to step 410: discarding the unnecessary operating parameter value(s) that the machine learning process produced on basis of the temporary exceptionality. Hence, the operating parameter value(s) that were characteristic of the restored learning stage of step 405 remain the best starting point from which the further execution of the machine learning process then continues in normal mode at step 411.

Notable is that step 410 does not necessarily mean completely discarding everything that was accomplished during the evaluation period. For generality, it may be said that step 410 comprises restoring said values of said one or more operating parameters towards what they were before said most recently accumulated pieces of said information began to accumulate.

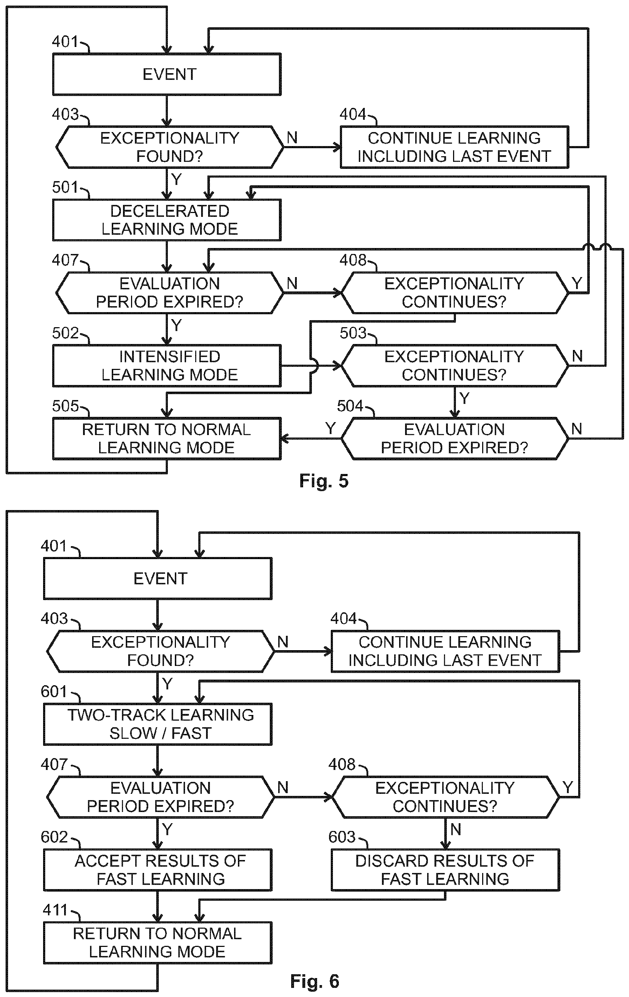

Fig. 5 illustrates another method, in which steps 401, 403, and 404 are the same as in fig. 4, however without any buffering step between steps 401 and 403. As in fig. 4, step 403 represents repeatedly evaluating a subset of most recently accumulated pieces of the accumulated information to find out whether said subset represents an abrupt change compared to information accumulated earlier than said subset. In response to finding that said subset represents such an abrupt change, the method proceeds to step 501, temporarily changing an effectiveness at which most recently accumulated pieces of said information affect said updating of the operating parameter values by the machine learning process. In fig. 5, this so-called decelerated learning mode involves temporarily decreasing said effectiveness for a period. As an example, for the duration of such a period, all newly accumulated pieces of information may be given smaller weights in a machine learning process that involves calculating weighted sums.

Similar to fig. 4, the period is called the evaluation period in fig. 5. Also similar to fig. 4, as long as the evaluation period goes on and the detected exceptionality continues, the method circulates in a loop that in fig. 5 consists of steps 501, 407, and 408. In response to finding that the abrupt change has continued throughout the evaluation period, the method of fig. 5 proceeds to step 502 where an intensified phase of the machine learning process is executed with an increased effectiveness at which most recently accumulated pieces of information affect the machine learning process. As the other alternative, in response to finding at step 408 that the abrupt change fades out during said period, the method of fig. 5 comprises just cancelling, at step 505, the temporary change of the effectiveness at which most recently accumulated pieces of said information affect said machine learning process.

The method of fig. 5 is based on a principle according to which a detected abrupt change triggers a period of somewhat more careful or cautious machine learning (see step 501). If the change proves to be a temporary one, having employed the decelerated learning mode of step 501 means that the exceptional sensor findings did not cause too much distortion to the operating parameter value(s) before the conditions normalized and began to drive the operating parameter value(s) back towards what suits the normal conditions best. On the other hand, if the change proves to be permanent, employing the intensified learning mode at step 502 means that the machine learning process adapts to the permanently changed conditions more effectively than if it only returned to the normal learning mode.

The intensified learning mode at step 502 may last for some predetermined period, after which a return to the normal learning mode could take place directly. In fig. 5 a more elaborate alternative is shown, in which the method involves again monitoring at step 503 whether the exceptionality continues. If not, the method backs up to the decelerated learning mode 501 because there has obviously been a further change that substantiates a period of somewhat more cautious machine learning mode. A positive finding at step 503 leads to checking, at step 504, whether an evaluation period for the intensified learning mode 502 has expired. If not, intensified learning is continued at step 502. A positive finding at step 504 triggers a return to the normal learning mode at step 505, however with maintaining the new values that were acquired through the intensified learning.

Additionally, or alternatively, the method may be clever enough to decide about changes in learning mode based on a rate at which adaptations take place due to the machine learning process. Once the rate of adaptations seems to settle towards some smaller value that is typical to just business as usual without abrupt changes, a return from the intensified learning mode to the normal learning mode may take place.

Fig. 6 illustrates a method in which steps 401, 403, and 404 are the same as in fig. 5. Step 601 is entered in response to finding that the subset of most recently accumulated pieces of information represents an abrupt change compared to information accumulated earlier than said subset. As a result, step 601 comprises again temporarily changing an effectiveness at which most recently accumulated pieces of said information affect said updating of the operating parameter values by the machine learning process. For the duration of the evaluation period, two parallel machine learning processes execute, in different modes. The so-called slow (or decelerated) learning mode is the same as that employed at step 501 of fig. 5. The results of the machine learning process that operates in the slow learning mode are those that repeatedly affect the value(s) of the operating parameter(s) actually in use. Parallelly, there executes a machine learning process in the fast (or intensified) learning mode. The results of the machine learning process that operates in the fast learning mode do not affect yet the value(s) of the operating parameter(s) actually in use. However, they affect a spare set of values kept in readiness to be taken into use if the abrupt change is found to be permanent at the expiry of the evaluation period at step 407. In such a case, at step 602 the method switches from using those value(s) of operating parameter(s) that were based on the slow learning mode to those based on the fast learning mode. If the exceptionality faded out, the fast learning mode is found to have been unnecessary. Its results are then discarded at step 603 without ever taking them into actual use. In any case, return to the normal learning mode occurs at step 411.

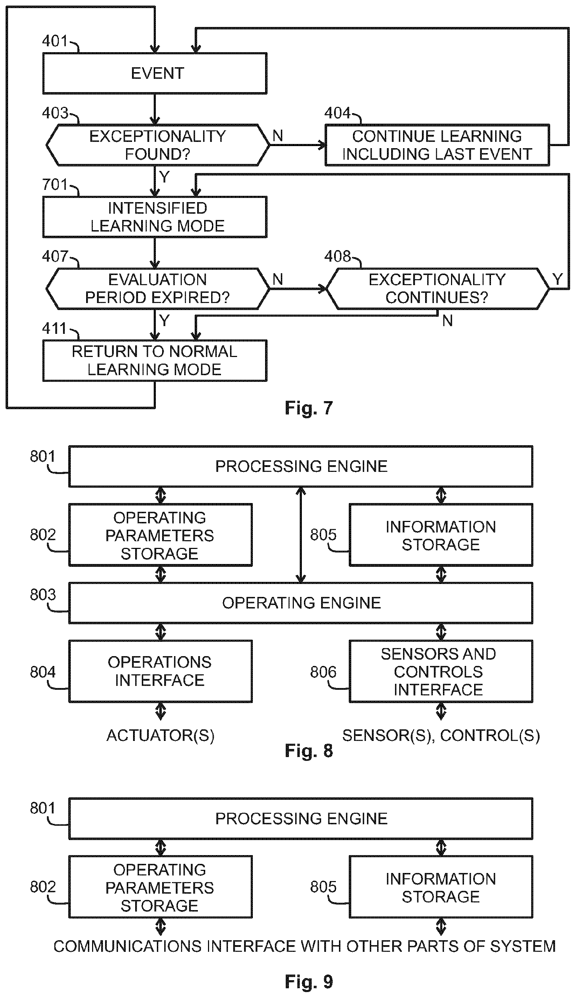

Fig. 7 illustrates a method in which steps 401, 403, and 404 are the same as in the other methods above. Step 701 is entered in response to finding that the subset of most recently accumulated pieces of information represents an abrupt change compared to information accumulated earlier than said subset. In the case of fig. 7, changing the effectiveness at which most recently accumulated pieces of information affect the machine learning process comprises temporarily increasing said effectiveness. As long as the exceptionality continues, the method of fig. 7 circulates in a loop that consists of steps 701, 407, and 408. If the exceptionality continues until the end of the evaluation period, a transition from step 407 to step 411 occurs. If the exceptionality fades out before the end of the evaluation period, a transition from step 408 to step 411 occurs. Both result in returning to the normal learning mode according to step 411.

The method of fig. 7 is based on a principle according to which a detected abrupt change triggers a period of more intensive machine learning (see step 701) in all cases. This approach is relatively simple to build into the form of an algorithm, and it is best suited to situations where the building automation system should be capable of quickly adapting to all kinds of at least semi-permanent changes.

Fig. 8 is a schematic block diagram of an apparatus for adapting operation of a building automation system. As a non-limiting example, the apparatus may be a node device of a building automation system, such as an intelligent luminaire. It comprises an information storage 805 configured to accumulate information indicative of sensor findings by one or more sensors. Such sensors may constitute parts of the apparatus itself, or they may be external sensors to which there is a sensors interface illustrated with block 806. In addition to, or in place of, sensors there may be user-operable controls such as light switches, dimmers, or the like. Information about users activating such controls is comparable to sensor findings in the sense that they may form a basis for making conclusions about the needs of the users that can be served through operation of the building automation system.

The apparatus of fig. 8 comprises an operating parameters storage 802 configured to maintain values of one or more operating parameters. Examples of operating parameters have been discussed in detail earlier in this text. For the purposes of this description, at least some of the operating parameters should be such the values of which define how the building automation system operates to best fulfil the detected or estimated needs of users.

A processing engine 801 is configured to apply a machine learning process to repeatedly update one or more of the operating parameter values stored in the operating parameter storage 802. The application of the machine learning process is based on the accumulated information in the information storage 805. In particular, the processing engine 901 is configured to repeatedly evaluate a subset of most recently accumulated pieces of the accumulated information to find out whether such a subset represents an abrupt change compared to information accumulated earlier than said subset. The processing engine 801 is also configured to, in response to finding that said subset represents an abrupt change compared to information accumulated earlier than said subset, temporarily change an effectiveness at which most recently accumulated pieces of said information affect said updating of the operating parameter values. Examples of ways in which the effectiveness can be temporarily changed have been described above with reference to figs. 3 to 7.

The organization of the apparatus of fig. 8 is two-tiered so that there is an operating engine 803 that is responsible for normal operation, without any aspects of machine learning. The operating engine 803 may receive information from sensors and/or controls, and control the operation of actuators accordingly through an operations interface 804. In doing so, it may operate at least partly on basis of the currently valid values of operating parameters maintained in the operating parameter storage 802. It may also convey information indicative of sensor findings and/or the use of controls to the information storage 805. With actuators, there are meant devices configured to generate effects serving users of the building automation system. As an example, if the building automation system involves aspects of controllable lighting, the actuators may comprise light sources for providing illumination in an environment served by the building automation system.

The processing engine 801 of fig. 8 may then operate in the background, analysing the information that keeps accumulating in the information storage to find out whether any abrupt changes occur. If so, it may apply one of the method variants explained earlier to update the values of one or more operating parameters in the operating parameters storage 802.

Fig. 9 illustrates schematically another kind of an apparatus for adapting operation of a building automation system. The roles and operation of the processing engine 801, information storage 805, and operating parameters storage 802 may as such be the same as above in fig. 8. The apparatus of fig. 9 may be a control apparatus configured to centrally maintain one or more operating parameter values for use by other devices of the building automation system. It has a communications interface, comprising one or more digital control bus interfaces for example, through which it may receive sensor findings and other information indicative of ways in which users have been detected to behave in the environment served by the building automation system. The processing engine 801 may apply a machine learning process of a kind described above to maintain the values of one or more operating parameters in the operating parameters storage 802. These values may be continuously or intermittently transmitted to other devices in the building automation system, so that these may then take them into account in their operation.

## Claims

1. A method for adapting operation of a building automation system, comprising:
- accumulating information indicative of sensor findings (401) by one or more sensors of the building automation system, and
- based on the accumulated information, applying a machine learning process (404, 405, 406, 501, 502, 601, 701) to repeatedly update values for one or more operating parameters of the building automation system; **characterized in that** the method comprises:
- repeatedly evaluating (403) a subset of most recently accumulated pieces of the accumulated information to find out whether said subset represents an abrupt change compared to information accumulated earlier than said subset, and
- in response to finding that said subset represents an abrupt change compared to information accumulated earlier than said subset, temporarily changing (405, 406, 501, 502, 601, 701) an effectiveness at which most recently accumulated pieces of said information affect said updating of the operating parameter values by the machine learning process.

2. A method according to claim 1, **wherein:**
- said repeated evaluating (403) of the subset of most recently accumulated pieces of information comprises comparing most recently received first information indicative of a first amount of light or sound received by one or more light or sound sensors, respectively, to previously received second information indicative of a second amount of light or sound received by the same one or more light or sound sensors, and
- a difference larger than a first predetermined threshold between said first information and said second information is taken as a finding that said subset represents an abrupt change.

3. A method according to any of claims 1 or 2, **wherein:**
- said repeated evaluating (403) of the subset of most recently accumulated pieces of information comprises comparing most recently received third information indicative of a first amount of gaseous substance or first temperature measured by one or more gas or temperature sensors, respectively, to previously received fourth information indicative of a second amount of gaseous substance or second temperature measured by the same one or more gas or temperature sensors, and
- a difference larger than a second predetermined threshold between said third information and said fourth information is taken as a finding that said subset represents an abrupt change.

4. A method according to any of claims 1 to 3, **wherein:**
- said repeated evaluating (403) of the subset of most recently accumulated pieces of information comprises comparing most recently received fifth information indicative of a first amount of user activity detected by one or more presence or movement sensors to previously received sixth information indicative of a second amount of user activity detected by the same one or more presence or movement sensors, and
- a difference larger than a third predetermined threshold between said fifth information and said sixth information is taken as a finding that said subset represents an abrupt change.

5. A method according to any of the preceding claims, **wherein:**
- said temporary changing (405, 406, 501, 502, 601, 701) of the effectiveness at which most recently accumulated pieces of said information affect said machine learning process comprises temporarily decreasing (405, 501) said effectiveness for a period.

6. A method according to claim 5, **wherein:**
- if the abrupt change continues throughout said period, the method comprises executing an intensified phase (406, 502) of said machine learning process with an increased effectiveness at which said most recently accumulated pieces of said information affect said machine learning process.

7. A method according to claim 5 or 6, **wherein:**
- in response to finding that the abrupt change fades out during said period, the method comprises at least one of: restoring (410, 603) said values of said one or more operating parameters towards what they were before said most recently accumulated pieces of said information began to accumulate, cancelling (411, 505) said temporary change of the effectiveness at which most recently accumulated pieces of said information affect said machine learning process.

8. A method according to any of claims 6 or 7, **wherein:**
- for the period during which said effectiveness remains temporarily decreased (405, 501), the method comprises buffering said most recently accumulated pieces of the accumulated information, and
- said intensified phase (406, 502) of said machine learning process comprises using also the buffered pieces of accumulated information as inputs to the machine learning process.

9. A method according to any of claims 1 to 4, **wherein:**
- said temporary changing (405, 406, 501, 502, 601, 701) of the effectiveness at which most recently accumulated pieces of said information affect said machine learning process comprises temporarily increasing (701) said effectiveness.

10. An apparatus for adapting operation of a building automation system, comprising:
- an information storage (805) configured to accumulate information indicative of sensor findings by one or more sensors,
- an operating parameters storage (802) configured to maintain values of one or more operating parameters, and
- a processing engine (801) configured to, based on the accumulated information in the information storage (805), apply a machine learning process to repeatedly update one or more of the operating parameter values stored in the operating parameters storage (802); **characterized in that** the processing engine (801) is configured to:
- repeatedly evaluate a subset of most recently accumulated pieces of the accumulated information to find out whether said subset represents an abrupt change compared to information accumulated earlier than said subset, and
- in response to finding that said subset represents an abrupt change compared to information accumulated earlier than said subset, temporarily change an effectiveness at which most recently accumulated pieces of said information affect said updating of the operating parameter values.

11. An apparatus according to claim 10,
**wherein** the apparatus is a control apparatus configured to centrally maintain said one or more operating parameter values for use by other devices of the building automation system through a communications interface.

12. An apparatus according to claim 10,
**wherein** the apparatus comprises:
- one or more actuators configured to generate effects serving users of the building automation system, and
- an operating engine (803) configured to operate said one or more actuators at least partly on basis of the one or more operating parameter values maintained in said operating parameters storage (802).

13. An apparatus according to claim 12,
**wherein** said one or more actuators comprise light sources for providing illumination in an environment served by the building automation system.
